# EUROPÄISCHE PATENTSCHRIFT

(11) **EP 3 028 896 B1**
(45) Veröffentlichungstag und Bekanntmachung des Hinweises auf die Patenterteilung: **16.09.2020**
(21) Anmeldenummer: 15003338.9
(22) Anmeldetag: 21.11.2015
(51) Int. Cl.: B60Q 1/08, B60Q 1/12, F21S 41/143, F21S 41/16, F21S 41/63, F21S 41/151

(54) **BELEUCHTUNGSVORRICHTUNG FÜR EIN KRAFTFAHRZEUG, KRAFTFAHRZEUG MIT EINER BELEUCHTUNGSVORRICHTUNG UND VERFAHREN ZUM BETREIBEN EINER BELEUCHTUNGSVORRICHTUNG**
LIGHTING DEVICE FOR A MOTOR VEHICLE, MOTOR VEHICLE WITH AN ILLUMINATION DEVICE AND METHOD FOR OPERATING A LIGHTING DEVICE
DISPOSITIF D'ÉCLAIRAGE POUR UN VÉHICULE AUTOMOBILE, VÉHICULE AUTOMOBILE COMPRENANT UN DISPOSITIF D'ÉCLAIRAGE ET PROCÉDÉ DE FONCTIONNEMENT D'UN DISPOSITIF D'ÉCLAIRAGE

(30) Priorität: 04.12.2014 DE 102014017978
(43) Veröffentlichungstag der Anmeldung: 08.06.2016
(73) Patentinhaber: AUDI AG, 85045 Ingolstadt (DE)
(72) Erfinder: Kaup, Markus, 74906 Bad Rappenau (DE); Hamm, Michael, 72800 Eningen (DE)
(74) Vertreter: Thielmann, Frank

(56) Entgegenhaltungen:
- EP-A1- 2 719 942
- EP-A2- 2 434 204
- WO-A1-2012/098142
- DE-A1-102012 205 435
- GB-A- 2 504 330
- JP-A- 2006 179 246
- JP-A- 2008 010 265
- JP-A- 2009 206 015
- US-A1- 2012 026 746

## Beschreibung

Die Erfindung betrifft eine Beleuchtungsvorrichtung für ein Kraftfahrzeug sowie ein Verfahren zum Betreiben einer Beleuchtungsvorrichtung der in den Oberbegriffen der Patentansprüche 1 und 5 angegebenen Art. Des Weiteren betrifft die Erfindung ein Kraftfahrzeug mit einer Beleuchtungsvorrichtung der im Patentanspruch 3 angegebenen Art.

Adaptive Scheinwerfer als solche sind aus dem allgemeinen Stand der Technik bekannt. Bei adaptiven Scheinwerfern kann deren Beleuchtungsintensität und Beleuchtungsrichtung an einen Fahrzustand des betreffenden Kraftfahrzeugs und/oder an eine Verkehrssituation des Kraftfahrzeugs angepasst werden, so dass eine Fahrbahn optimal ausgeleuchtet wird. Um eine adaptive Lichtverteilung zu ermöglichen wird beispielsweise ein Lichtmodul, welches einen Reflektor und eine entsprechende Lichtquelle aufweist, mittels eines beweglichen Rahmens verschwenkt. Die Verschwenkung des Lichtmoduls erfolgt beispielsweise über einen Schrittmotor. Alternativ ist es auch bekannt, ein Lichtbild durch einzelne Segmente zu erzeugen. Diese Segmente können mehrere Lichtquellen und diesen zugeordnete Reflektoren und/oder Linsen aufweisen. Durch Dimmung einzelner Lichtquellen, beispielsweise einzelner LEDs oder Laser, werden Segmente mit unterschiedlicher Helligkeit erzeugt. Somit können Objekte ausgespart, gezielt angeleuchtet oder über Verschiebung eines Lichtschwerpunktes adaptiv ausgeleuchtet werden.

Die zuerst genannte Variante macht es erforderlich, dass relativ große Massen bewegt werden müssen, beispielsweise der vorstehend genannte Reflektor, eine Linse, entsprechende Leuchtmittel, Tragrahmen und dergleichen. Dies erfordert einen großen mechanischen Aufwand, besonders stark ausgelegte Schrittmotoren, hat zum Teil relativ große Spaltmaße zur Folge, wobei zudem eine Bewegung des entsprechenden Lichtbilds stets träge erscheint. Bei der zweitgenannten Alternative sind aufgrund der Erforderlichkeit mehrerer Segmente große optische Systeme unvermeidbar, die einen entsprechend großen Bauraum erforderlich machen.

Die DE 103 21 564 A1 zeigt einen Kraftfahrzeugscheinwerfer, wobei eine Krümmung einer Lichtaustrittsfläche des Kraftfahrzeugscheinwerfers verändert wird, infolgedessen ein Strahlengang einer LED durch die Lichtaustrittsfläche verändert wird. Dadurch wird eine Defokussierung des von der LED emittierten Lichts erreicht.

Die DE 197 37 653 A1 zeigt eine mehrere Mikrospiegel aufweisende Spiegelfläche, welche von einer Lichtquelle in Form eines Xenonlichts beleuchtet wird. Durch Umschalten, also durch Zu- oder Wegschalten, der Mikrospiegel kann die Lichtverteilung verändert werden. Unterschiedliche Lichtfunktionen, wie ein Fernlicht, ein Abblendlicht, ein Nebellicht und dergleichen können mit nur einer Lichtquelle erzielt werden.

Die DE 10 2008 022 7965 A1 zeigt einen Fahrzeugscheinwerfer, welcher einen Laser als Lichtquelle aufweist. Der Laser ist auf einen Lichtmodulator gerichtet. Der Lichtmodulator weist zumindest einen Spiegel auf, der zumindest um eine Spiegelachse verschwenkbar ist. Dadurch kann die Abstrahlcharakteristik der Lichtquelle verändert werden.

Die DE 10 2012 224 345 A1 zeigt einen Fahrzeugscheinwerfer, welcher eine Halbleiterlichtquelle und eine mittels eines Piezoaktors positionsverstellbare Linse umfasst. Dadurch kann ein Lichtabstrahlmuster des Fahrzeugscheinwerfers variiert werden, ohne dass die Halbleiterlichtquelle und eine damit verbundene Kühleinrichtung mitverstellt werden müssen.

Die DE 100 05 795 A1 zeigt einen Scheinwerfer, der eine Linse und einen Lichtemitter aufweist. Die Linse kann mittels eines Aktors verschoben werden, infolgedessen ein Lichtkegel verschwenkt wird.

Die DE 20 2007 018 181 U1 zeigt einen Scheinwerfer mit zumindest einer Lichtquelle. Zur Bereitstellung einer dynamischen Kurvenlichtfunktion umfasst der Scheinwerfer eine Linse, die um eine annähernd vertikale Achse drehbar gelagert ist. Dadurch kann eine Lichtverteilung auf der Fahrbahn horizontal verschwenkt werden.

Die DE 196 25 923 A1 zeigt einen Fahrzeugscheinwerfer mit einer Lichtquelle und einer Linse. Die Linse kann vertikal und horizontal verschoben werden, um jeweilige Einstellwinkel einer Lichtstromverteilung zu justieren.

Die DE 10 2009 035 743 A1 zeigt ein Lichtmodul für einen Kraftfahrzeugscheinwerfer. Das Lichtmodul umfasst eine Lichtquelle und eine Linse. Zur Realisierung einer Kurvenlichtfunktion kann das gesamte Lichtmodul um eine vertikale Drehachse verschwenkt werden. Alternativ kann es auch vorgesehen sein, dass zur Realisierung der Kurvenlichtfunktion nur die Linse verschwenkbar ausgebildet ist.

Die DE 10 2007 049 361 A1 zeigt einen Fahrzeugscheinwerfer mit einer Lichtquelle und einer Linse, welche zur Realisierung einer Kurvenlichtfunktion um eine im Wesentlichen vertikale Achse verschwenkbar ist.

Die US 2010/0061090 A1 zeigt ein Beleuchtungssystem mit mehreren Lichtquellen und mehreren Linsen. Die Linsen sind translatorisch verschiebbar, wodurch jeweilige Lichtstrahlen verschwenkt werden können.

Die DE 10 2013 003 959 A1 zeigt ein Verfahren zum Betreiben eines Scheinwerfersystems eines Kraftfahrzeugs. Sobald eine Bewegung einer Person in Fahrtrichtung vor dem Kraftfahrzeug erfasst wird, wird zumindest ein Scheinwerfer des Scheinwerfersystems um einer vertikale Achse verschwenkt.

Die EP 2 128 521 A zeigt einen verschwenkbaren Fahrzeugscheinwerfer. Der Fahrzeugscheinwerfer kann derart verschwenkt werden, dass ein Lichtkegel auf einen Fußgänger gerichtet wird.

Aus der WO 2012/098142 A1 ist ein Modul für die Projektion eines Strahls bekannt, welches eine Lichtquelle, die zumindest mit einer Leuchtdiode ausgestattet ist, welche dazu ausgelegt ist, Lichtstrahlen auszusenden, und ein optisches Element umfasst, welches eine Linse aufweist zur Projektion eines Bildes der Quelle, um den Lichtstrahl zu erzeugen. Das Modul umfasst Mittel zum Drehen des optischen Elements in Bezug auf die Lichtquelle, um die Richtung zu ändern, in welcher der Strahl projiziert wird.

Aus der EP 2 719 942 A1 ist eine optische Einheit bekannt, welche eine Linse umfasst, durch die von einer Lichtquelle emittiertes Licht von hinten eintritt und das Licht nach vorne austritt als ein Beleuchtungsstrahl. Eine Rotationslinse bewegt sich periodisch, und ein Frontbereich der Linse wird mit dem Beleuchtungsstrahl abgetastet, um einen vorgegebenen beleuchteten Bereich zu formen.

Aus der JP 2008 010265 A ist ein Frontscheinwerfer für ein Fahrzeug bekannt, bei welchem von einer starr mit dem Fahrzeug verbundenen Lichtquelle abgestrahltes Licht von einem Reflektor vorwärts reflektiert wird, wobei eine Schwenkfunktion durch den frei in horizontaler Richtung um eine vertikale Achse drehbaren Reflektor realisiert wird. Die senkrechte Achse geht durch die Lichtquelle, und das durch den Reflektor reflektierte Licht tritt durch eine auf dem Reflektor vor diesem angeordnete Linse.

Die EP 2 434 204 A2 offenbart einen Scheinwerfer für ein Kraftfahrzeug, umfassend eine Lichtquellenanordnung mit mehreren Lichtquellen, insbesondere LEDs, wobei wenigstens einem Teil der Lichtquellenanordnung ein Linsenelement nachgeschaltet ist, wobei die Lichtquellenanordnung und das Linsenelement zur Erzeugung von wenigstens zwei vorbestimmten Lichtverteilungen relativ zueinander bewegbar sind.

Die JP 2009 206015 A zeigt einen Frontscheinwerfer für ein Fahrzeug, welcher mit einer Vielzahl von LED-Einheiten als Lichtquellen ausgestattet ist, wobei eine variable Linse zur Lichtverteilung genutzt wird. Diese wechselt zwischen einer bündelnden Lichtverteilung und einer streuenden Lichtverteilung, indem diese aufwärts und abwärts vor der entsprechenden LED-Einheit bewegt wird.

Die GB 2 504 330 A beschreibt ein Scheinwerfersystem mit einer adaptiven Strahlfunktion. Das Scheinwerfersystem kann wenigstens in einem ersten und zweiten Modus betrieben werden, um wenigstens ein erstes und ein zweites Fernbeleuchtungsmuster bereitzustellen. Dazu umfasst das System ein photolumineszierendes Material, einen Lichtstrahlgenerator zum Erzeugen von einem ersten und einem zweiten unabhängig steuerbaren Satz eines oder mehrerer Lichtstrahlen zum Beleuchten der jeweiligen Bereiche des photolumineszierenden Materials im ersten bzw. zweiten Modus.

Die DE 10 2012 205435 A1 beschreibt eine Beleuchtungsvorrichtung bei der die Lichtquelle starr mit dem Gehäuse verbunden ist und ferner zumindest ein Lichtwellenleiter zum Leiten des Lichts der Lichtquelle zu der optischen Einrichtung vorgesehen ist. Die Lichtquelle ist somit vorzugsweise eine separate, von der optischen Einrichtung getrennte Einheit. Durch die starre Verbindung der Lichtquelle mit dem Gehäuse wird die Demontage und der Austausch der Lichtquelle erleichtert. Der Lichtwellenleiter gewährleistet dabei, dass das Licht der Lichtquelle zur optischen Einrichtung gelangt.

Die JP 2006 179246 A beschreibt eine Lichtverteilungssteuermittel zum Durchführen einer Nachführvariation einer Bestrahlungsrichtung und eines Bestrahlungsbereichs eines Scheinwerfers entsprechend eines Betriebszustands, beispielsweise betrifft das Lichtverteilungssteuermittel die Scheinwerfereinheit für Fahrzeuge, die mit dem adaptiven Formbeleuchtungssystem ausgestattet sind.

Es ist die Aufgabe der vorliegenden Erfindung, eine vereinfachte Anpassung eines Leuchtbildes einer Beleuchtungsvorrichtung eines Kraftfahrzeugs zu ermöglichen.

Diese Aufgabe wird durch eine Beleuchtungsvorrichtung für ein Kraftfahrzeug, ein Kraftfahrzeug mit einer Beleuchtungsvorrichtung und durch ein Verfahren zum Betreiben einer Beleuchtungsvorrichtung mit den Merkmalen der unabhängigen Patentansprüche gelöst. Vorteilhafte Ausgestaltungen mit zweckmäßigen und nicht trivialen Weiterbildungen der Erfindung sind in den abhängigen Ansprüchen angegeben.

Die erfindungsgemäße Beleuchtungsvorrichtung für ein Kraftfahrzeug umfasst zumindest eine adaptive Beleuchtungseinheit, welche eine unbeweglich angeordnete Beleuchtungsquelle und wenigstens ein zumindest teilweise in einem Strahlengang der Beleuchtungsquelle angeordnetes optisches Bauelement sowie eine Verstelleinrichtung aufweist, welche dazu ausgebildet ist, das optische Bauelement zu bewegen. Bei der erfindungsgemäßen Beleuchtungsvorrichtung umfasst die Verstelleinrichtung einen mikromechanischen Aktor, wobei das optische Bauelement derart angeordnet und ausgebildet ist, dass aus einer Bewegung des optischen Bauelements mittels des mikromechanischen Aktors eine Verschwenkung eines mittels der Beleuchtungsquelle in Zusammenwirken mit dem optischen Bauelement erzeugbaren Lichtkegels resultiert.

Das optische Bauelement ist erfindungsgemäß eine Linse. Bei dem optischen Bauelement kann es sich auch um eine Vorsatzoptik oder ein anderes abbildendes System handeln. Eine Bewegung des optischen Bauelements bewirkt eine Änderung einer Ausrichtung und/oder Positionierung des optischen Bauelements gegenüber der Beleuchtungsquelle. In Folge dessen wird eine Brechung bzw. Beugung von zumindest einem Teil des durch das optische Bauelement hindurchtretenden Strahlengangs der Beleuchtungsquelle entsprechend verändert, was in der Verschwenkung des Lichtkegels resultiert. Das optische Bauelement ist vorzugsweise derart angeordnet und ausgebildet, dass die Abmaße des Lichtkegels sich bei einer Verschwenkung des Lichtkegels möglichst wenig verändern, also der Lichtkegel als solcher bezüglich seiner Form im Wesentlichen unverändert bleibt und nur seine Ausrichtung veränderbar ist.

Die Ausführung eines beweglichen Lichtkegels erfolgt also mit anderen Worten über eine Mikromechanik in Form der den mikromechanischen Aktor aufweisenden Verstelleinrichtung. Die Beleuchtungsquelle als solche ist hierbei statisch und muss nicht bewegt werden. Das in Abstrahlrichtung der Beleuchtungseinheit vor der Beleuchtungseinheit angeordnete optische Bauelement oder auch weitere optische Bauelemente können so bewegt werden, dass die Abbildung des Lichtkegels adaptiv verändert werden kann. Dadurch müssen keine großen Massen bewegt werden und es sind keine großen optischen Bauelemente erforderlich, um einen adaptiven Lichtkegel bereitzustellen.

Erfindungsgemäß ist es zudem vorgesehen, dass das optische Bauelement um eine Achse verschwenkbar gelagert und der mikromechanische Aktor dazu ausgebildet ist, das optische Bauelement um die Achse zu verschwenken. Dadurch ist der Lichtkegel bei bestimmungsgemäßer Anordnung der Beleuchtungsvorrichtung im Kraftfahrzeug um die Fahrzeughochachse und/oder um die Fahrzeugquerachse verschwenkbar. Eine translatorische Bewegbarkeit des optischen Bauelements relativ zu dem unbeweglichen, also starr angeordneten, optischen Bauelement ist auch möglich. Dadurch kann eine Fokussierung oder Defokussierung der Beleuchtungsquelle erzielt werden.

Die Beleuchtungsvorrichtung ist dazu ausgebildet, eine Grundlichtverteilung mit einer Abblendlichtfunktion und/oder einer Fernlichtfunktion, einer Teilfernlichtfunktion oder Markierungslichtfunktion bereitzustellen, wobei der mittels der Beleuchtungsquelle im Zusammenwirken mit dem optischen Bauelement erzeugbare bewegliche Lichtkegel der Grundlichtverteilung zumindest teilweise überlagerbar ist. Indem ist die Beleuchtungsvorrichtung dazu ausgebildet, jeweils mit dem beweglichen Lichtkegel eine Beleuchtungsstärke in einem Zentralbereich der Grundlichtverteilung zu erhöhen, und/oder die Beleuchtungsstärke angrenzend an durch die Grundlichtverteilung ausgesparte Objekte als Teilfernlicht mit einer vertikalen Hell-Dunkel-Grenze zu erhöhen, und/oder in Kurven oder als sonstiger Topologieausgleich einen Fahrbahnverlauf adaptiv auszuleuchten.

Die erfindungsgemäße Beleuchtungsvorrichtung zeichnet sich dadurch aus, dass der mikromechanische Aktor ein elektrostatischer Aktor in Form einer elektrostatischen Torsionsstruktur ist, mit der das optische Bauelement bewegt wird. Der mikromechanische Aktor weist also eine sehr geringe Bauform auf, so dass die gesamte Beleuchtungsvorrichtung kompakt ausgebildet werden kann.

Eine weitere vorteilhafte Ausführungsform der Erfindung sieht vor, dass die Beleuchtungsquelle ein Laser ist. Durch den Laser kann eine im Wesentlichen punktförmige Beleuchtungsquelle bereitgestellt werden, die einen sehr geringen Durchmesser aufweist. Dadurch reichen sehr geringe Auslenkungen des optischen Bauelements aus, um relativ große Auslenkungen bzw. Schwenkbewegungen des Lichtkegels zu bewirken. Kleinste Bewegungen des optischen Bauelements von beispielsweise 0,1 mm reichen aus, um den Lichtkegel um ca. 5° zu verschwenken. Um größere Schwenkbereiche, wie z.B. 15 bis 25° um eine vorgegebene Neutrallage zu erreichen, können die Aktuatorik und das optische System entsprechend ausgelegt sein. Als punktförmige Beleuchtungsquelle ist insbesondere ein Laser sehr vorteilhaft, da dieser eine sehr hohe Leuchtdichte aufweist. Alternativ ist es aber auch möglich, eine oder mehrere LEDs oder Hochleistungs-LEDs als die Beleuchtungsquelle einzusetzen.

Die Erfindung sieht vor, dass die Beleuchtungsvorrichtung dazu ausgebildet ist, eine Grundlichtverteilung mit einer Abblendlichtfunktion und/oder einer Fernlichtfunktion bereitzustellen, wobei der mittels der Beleuchtungsquelle im Zusammenwirken mit dem optischen Bauelement erzeugbare Lichtkegel der Grundlichtverteilung zumindest teilweise überlagerbar ist. Die Abblendlicht- und/oder Fernlichtfunktion kann zum Beispiel mittels Xenonscheinwerfern, LED-Scheinwerfern, einem auf Laserlicht basierenden Scheinwerfer oder auch mittels Halogenscheinwerfern realisiert sein. Die Verwendung eines LED-Scheinwerfers zur Bereitstellung der Grundlichtverteilung bringt, wenn als die Beleuchtungsquelle ein Laser eingesetzt wird, den Vorteil mit sich, dass die Lichtfarben bei LED-Scheinwerfern und Lasern relativ ähnlich ausgebildet werden können. Der mittels der Beleuchtungsquelle im Zusammenwirken mit dem optischen Bauelement erzeugbare Lichtkegel kann beispielsweise als ergänzende Beleuchtung für die Fernlichtfunktion dienen, kann aber auch als ergänzende Beleuchtung für die Abblendlichtfunktion dienen. Grundsätzlich wird also der Lichtkegel einer Grundlichtverteilung überlagert, wodurch beispielsweise eine Beleuchtungsstärke in einem Zentralbereich der Grundlichtverteilung erhöht werden kann. Die Überlagerung des Lichtkegels kann auch zur visuellen Darstellung einzelner Lichtquellen, insbesondere zur Darstellung bzw. besseren Erlebbarkeit von überlagerten zusätzlichen Lichtfunktionen dienen. Des Weiteren kann durch eine Überlagerung des Lichtkegels eine Harmonisierung weiterer Lichtverteilungen, wie zum Beispiel eines Teilfernlichts, erzielt werden. Der bewegliche Lichtkegel selbst kann beispielsweise auch als Teilfernlicht mit einer vertikalen Hell-Dunkel-Grenze dienen. Beispielsweise kann dadurch partiell die Beleuchtungsstärke erhöht werden, insbesondere angrenzend an durch die Grundlichtverteilung ausgesparte Objekte. Falls der bewegliche Lichtkegel selbst als Teilfernlicht eingesetzt wird, erhöht dies die Einsatzbereiche des Teilfernlichts, da der bewegliche Lichtkegel besonders einfach verschwenkbar und somit auf unterschiedliche Fahrsituationen einstellbar ist. Des Weiteren kann der bewegliche Lichtkegel in Form eines Teilfernlichts auch zur visuellen Verdeutlichung und Erlebbarkeit des Teilfernlichts beitragen. Darüber hinaus ist es auch möglich, den mittels der Beleuchtungsquelle im Zusammenwirken mit dem optischen Bauelement erzeugbaren Lichtkegel zur adaptiven Ausleuchtung eines Fahrbahnverlaufs zu verwenden, beispielsweise in Kurven oder als sonstigen Topologieausgleich. Die adaptive Ausleuchtung des Fahrbahnverlaufs erfolgt dabei vorzugsweise in Form eines Teilfernlichts, wodurch die Nutzbarkeit und Sichtbarkeit dieses Teilfernlichts ebenfalls erhöht und die visuelle Verdeutlichung und Erlebbarkeit des Teilfernlichts verstärkt wird.

Das erfindungsgemäße Kraftfahrzeug umfasst die erfindungsgemäße Beleuchtungsvorrichtung oder eine vorteilhafte Ausführungsform der erfindungsgemäßen Beleuchtungsvorrichtung.

In vorteilhafter Ausgestaltung des Kraftfahrzeugs ist es vorgesehen, dass die Beleuchtungsvorrichtung zwei der Beleuchtungseinheiten aufweist, wobei eine der Beleuchtungseinheiten in einem linken Scheinwerfermodul des Kraftfahrzeugs und eine der Beleuchtungseinheiten in einem rechten Scheinwerfermodul des Kraftfahrzeugs angeordnet ist.

Bei dem erfindungsgemäßen Verfahren zum Betreiben einer Beleuchtungsvorrichtung eines Kraftfahrzeugs wird ein zumindest teilweise in einem Strahlengang einer Beleuchtungsquelle von zumindest einer adaptiven Beleuchtungseinheit angeordnetes, als Linse ausgebildetes optisches Bauelement mittels einer Verstelleinrichtung bewegt. Im erfindungsgemäßen Verfahren umfasst die Verstelleinrichtung einen mikromechanischen Aktor, mittels welchem das optische Bauelement derart bewegt wird, dass ein mittels der Beleuchtungsquelle im Zusammenwirken mit dem optischen Bauelement erzeugter Lichtkegel verschwenkt wird, wobei das optische Bauelement um eine Achse verschwenkbar gelagert ist und das optische Bauelement mittels des mikromechanischen Aktors um die Achse verschwenkt wird, wobei mittels der Beleuchtungsvorrichtung eine Grundlichtverteilung mit einer Abblendlichtfunktion und/oder einer Fernlichtfunktion, einer Teilfernlichtfunktion oder Markierungslichtfunktion bereitgestellt wird, wobei der mittels der Beleuchtungsquelle im Zusammenwirken mit dem optischen Bauelement erzeugte bewegliche Lichtkegel der Grundlichtverteilung zumindest teilweise überlagert wird, indem jeweils mit dem beweglichen Lichtkegel eine Beleuchtungsstärke in einem Zentralbereich der Grundlichtverteilung erhöht wird, und/oder die Beleuchtungsstärke angrenzend an durch die Grundlichtverteilung ausgesparte Objekte als Teilfernlicht mit einer vertikalen Hell-Dunkel-Grenze erhöht wird,und/oder in Kurven oder als sonstiger Topologieausgleich ein Fahrbahnverlauf adaptiv ausgeleuchtet wird. Das erfindungsgemäße Verfahren zeichnet sich dadurch aus, dass der mikromechanische Aktor ein elektrostatischer Aktor mit einer Form einer elektrostatischen Torsionsstruktur ist, mit der das optische Bauelement bewegt wird. Vorteilhafte Ausgestaltungen der erfindungsgemäßen Beleuchtungsvorrichtung sind als vorteilhafte Ausgestaltungen des erfindungsgemäßen Verfahrens anzusehen, wobei die Beleuchtungsvorrichtung insbesondere Mittel zur Durchführung der Verfahrensschritte aufweist.

In vorteilhafter Ausgestaltung des erfindungsgemäßen Verfahrens ist es vorgesehen, dass der mikromechanische Aktor zum Bewegen des optischen Bauelements in Abhängigkeit von einer erfassten Verkehrssituation des Kraftfahrzeugs angesteuert wird. Mit anderen Worten kann das optische Bauelement adaptiv mittels des mikromechanischen Aktors in Abhängigkeit von einer erfassten Verkehrssituation bewegt werden, so dass der mittels der Beleuchtungsquelle im Zusammenwirken mit dem optischen Bauelement erzeugbare Lichtkegel in Abhängigkeit von einer jeweils erfassten Verkehrssituation des Kraftfahrzeugs verschwenkt werden kann. Zusätzlich kann bei der Verschenkung des Lichtkegels auch eine Fahrzeugsituation, beispielsweise ein Beladungszustand und eine daraus resultierende Verschwenkung bzw. Neigung des Kraftfahrzeugs um seine Fahrzeugquerachse, berücksichtigt werden. Dadurch kann eine optimale Ausleuchtung einer Fahrbahn in jedem Fahrzeugzustand und in jeder Verkehrssituation gewährleistet werden. Beispielsweise umfasst das Fahrzeug entsprechend ausgelegte Sensoren, welche dazu ausgebildet sind, permanent den aktuellen Fahrzustand, wie beispielsweise Kurvenfahrten, Abbiegevorgänge, Beladungszustände des Kraftfahrzeugs sowie die aktuelle Verkehrssituation, beispielsweise Dunkelheit, Starkregen, andere Verkehrsteilnehmer und dergleichen, zu erfassen. Ein entsprechend ausgebildetes Steuergerät wertet die einzelnen Informationen aus und passt die Ausleuchtung der Straße durch eine entsprechende Ansteuerung des mikromechanischen Aktors an, welcher das optische Bauelement wiederum entsprechend den Steuersignalen betätigt bzw. bewegt.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibug genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Draufsicht eines Kraftfahrzeugs, welches eine Beleuchtungsvorrichtung mit einem linken Scheinwerfermodul und einem rechten Scheinwerfermodul umfasst, wobei jeweilige adaptive Beleuchtungseinheiten in dem linken und rechten Scheinwerfermodul des Kraftfahrzeugs angeordnet sind;
- Fig. 2: eine schematische Perspektivansicht auf eine der adaptiven Beleuchtungseinheiten, welche eine unbeweglich angeordnete Beleuchtungsquelle und ein in einem Strahlengang der Beleuchtungsquelle angeordnetes optisches Bauelement sowie eine Verstelleinrichtung umfasst, welche dazu ausgebildet ist, das optische Bauelement zu bewegen;
- Fig. 3: eine schematische Darstellung, in welcher eine Grundlichtverteilung und ein der Grundlichtverteilung überlagerter Lichtkegel gezeigt sind;
- Fig. 4: eine schematische Darstellung einer weiteren Grundlichtverteilung, wobei zwei Lichtkegel schematisch dargestellt sind, mittels welchen eine Beleuchtungsstärke angrenzend zu einem von der Grundlichtverteilung ausgesparten Fahrzeug dargestellt ist; und in
- Fig. 5: eine weitere schematische Darstellung einer Grundlichtverteilung, wobei eine adaptive Ausleuchtung eines Fahrbahnverlaufs mittels eines Lichtkegels erfolgt.

In den Figuren werden gleiche oder funktionsgleiche Elemente mit gleichen Bezugszeichen versehen.

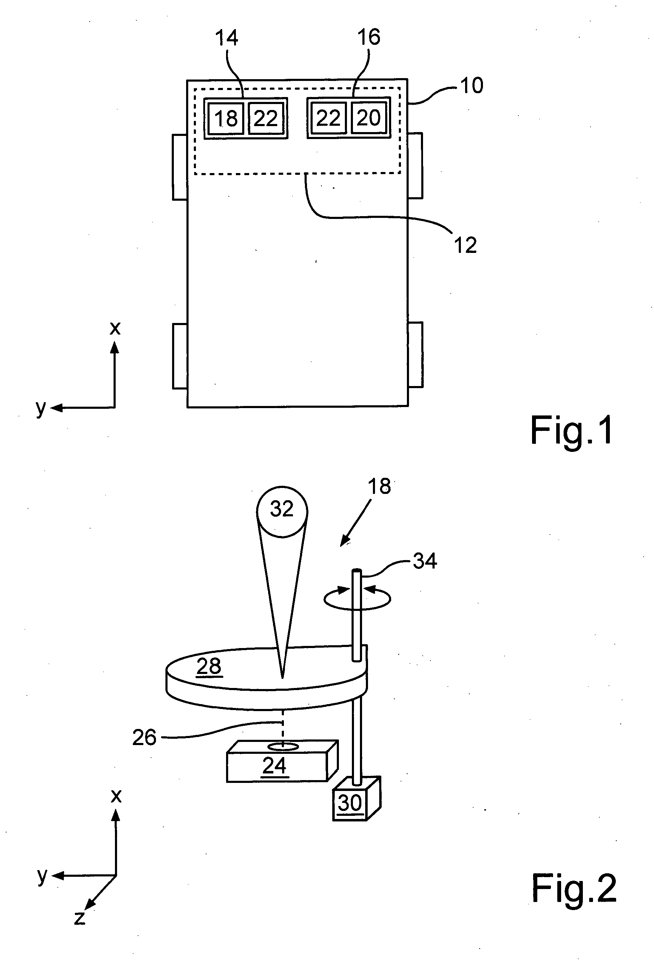

Ein Kraftfahrzeug 10 mit einer Beleuchtungsvorrichtung 12 ist in einer schematischen Draufsicht in Fig. 1 gezeigt. Die Beleuchtungsvorrichtung 12 umfasst ein linkes Scheinwerfermodul 14 und ein rechtes Scheinwerfermodul 16. Die Scheinwerfermodule 14, 16 umfassen jeweils eine adaptive Beleuchtungseinheit 18, 20. Des Weiteren umfassen die Scheinwerfermodule 14, 16 jeweils weitere Beleuchtungseinheiten 22, welche dazu ausgebildet sind, eine Grundlichtverteilung mit einer Abblendlichtfunktion und einer Fernlichtfunktion bereitzustellen.

In Fig. 2 ist einer der beiden adaptiven Beleuchtungseinheiten 18 in einer schematischen Perspektivansicht gezeigt. Die hier nicht dargestellte Beleuchtungseinheit 20, welche im rechten Scheinwerfermodul 16 angeordnet ist, ist im Wesentlichen genauso aufgebaut wie die hier schematisch gezeigte adaptive Beleuchtungseinheit 18.

Die adaptive Beleuchtungseinheit 18 umfasst eine unbeweglich angeordnete Beleuchtungsquelle 24, welche vorliegend als Laser ausgebildet ist. Des Weiteren weist die Beleuchtungseinheit 18 ein in einem Strahlengang 26 der Beleuchtungsquelle 24 angeordnetes optisches Bauelement 28 sowie eine Verstelleinrichtung 30 auf, welche dazu ausgebildet ist, das optische Bauelement 28 zu bewegen.

Die Verstelleinrichtung 30 weist im vorliegenden Fall einen hier nicht beanspruchten piezoelektrischen Aktor auf, wobei das optische Bauelement 28 derart angeordnet und ausgebildet ist, dass aus einer Bewegung des optischen Bauelements 28 mittels des piezoelektrischen Aktors 30 eine Verschwenkung eines mittels der Beleuchtungsquelle 24 im Zusammenwirken mit dem optischen Bauelement 28 erzeugbaren Lichtkegels 32 resultiert.

Statt des piezoelektrischen Aktors umfasst die Verstelleinrichtung 30 erfindungsgemäß einen elektrostatischen Aktor. Gemäß weiteren hier nicht beanspruchten Beispielen kann die Verstelleinrichtung 30 eine Formgedächtnislegierung oder auch einen elektro-thermo-mechanischen Wandler umfassen, mittels welchen das optische Bauelement 28 bewegbar ist. Im Wesentlichen können sämtliche Aktoren als ein mikromechanischer Aktor eingesetzt werden, die in der Mikrosystemtechnik Anwendung finden.

Im vorliegenden Fall handelt es sich bei dem optischen Bauelement 28 um eine Linse, mittels welcher der Strahlengang 26 der Beleuchtungsquelle 24 je nach Ausrichtung und/oder Positionierung des optischen Bauelements 28 gegenüber der Beleuchtungsquelle 24 unterschiedlich gebrochen bzw. gebeugt wird.

Das optische Bauelement 28 ist in der vorliegend gezeigten Ausführungsform um eine Achse 34 verschwenkbar bzw. verdrehbar gelagert, wobei der hier nicht beanspruchte piezoelektrische Aktor der Verstelleinrichtung 30 dazu ausgebildet ist, das optische Bauelement 28 um die Achse 34 zu verschwenken bzw. zu verdrehen. Der hier nicht beanspruchte piezoelektrische Aktor kann beispielsweise in Form eines Mikrobiegeelements ausgebildet sein, wobei ein Piezomaterial beispielsweise auf ein piezoelektrisch inaktives Material aufgebracht ist. Sowohl das Piezomaterial als auch das piezoelektrisch inaktive Material sind in Form einer Balkeneinspannung eingespannt. Wird eine elektrische Spannung auf das Piezomaterial aufgebracht bzw. an dieses angelegt, wird eine durch einen Quereffekt verursachte Längenänderung des Piezomaterials durch das starre inaktive Material in eine Verkrümmung der gesamten Anordnung umgewandelt. Dadurch kann eine einfache Verschwenkung des optischen Bauelements 28 um die Achse 34 erfolgen. Im Wesentlichen können aber sämtliche mikromechanischen Aktoren, die Anwendung in der Mikrosystemtechnik finden, für die Verstelleinrichtung 30 zum Verschwenken des optischen Bauelements 28 eingesetzt werden, welche aber hier auch nicht beansprucht werden.

In dem vorliegend gezeigten Ausführungsbeispiel ist die Beleuchtungseinheit 18 derart angeordnet, dass der Lichtkegel 32 um die Fahrzeughochachse z verschwenkt werden kann. Mit anderen Worten kann der Lichtkegel 32 aus Sicht eines Fahrzeuginsassen nach links und rechts verschwenkt werden. Alternativ ist es auch möglich, dass das optische Bauelement 28 derart angeordnet und ausgebildet ist, dass der Lichtkegel 32 bei bestimmungsgemäßer Anordnung der adaptiven Beleuchtungseinheit 18 bzw. der gesamten Beleuchtungsvorrichtung 12 im Kraftfahrzeug 10 um die Fahrzeugquerachse y verschwenkbar ist. Mit anderen Worten kann der Leuchtkegel 32 also aus Sicht eines Fahrzeuginsassen nach oben und nach unten verschwenkt werden.

Abweichend von der in Fig. 2 dargestellten Ausführungsform der Beleuchtungseinheit 18 kann diese auch derart ausgebildet sein, dass eine translatorische Bewegbarkeit des optischen Bauelements 28 relativ zu dem unbeweglichen, also starr angeordneten, optischen Bauelement 28 möglich ist. Dadurch kann statt einer Verschwenkung des Lichtkegels 32 auch eine Fokussierung oder Defokussierung der Beleuchtungsquelle 24 erzielt werden. Wie bereits in Zusammenhang mit der Fig. 1 erwähnt, umfassen die Scheinwerfermodule 14, 16 noch weitere Beleuchtungseinheiten 22, welche dazu ausgebildet sind, eine Grundlichtverteilung mit einer Abblendlichtfunktion und einer Fernlichtfunktion bereitzustellen. Mittels der Beleuchtungsquellen 24 der adaptiven Beleuchtungseinheiten 18, 20 im Zusammenwirken mit den jeweiligen optischen Bauelementen 28 erzeugbare Lichtkegel 32 sind dabei der Grundlichtverteilung überlagerbar.

Die weiteren Beleuchtungseinheiten 22 können zum Beispiel als Xenonscheinwerfer, LED-Scheinwerfer, auf Laserlicht basierende Scheinwerfer oder auch als Halogenscheinwerfer realisiert sein, mittels welchen die Abblendlichtfunktion und Fernlichtfunktion bereitgestellt werden kann.

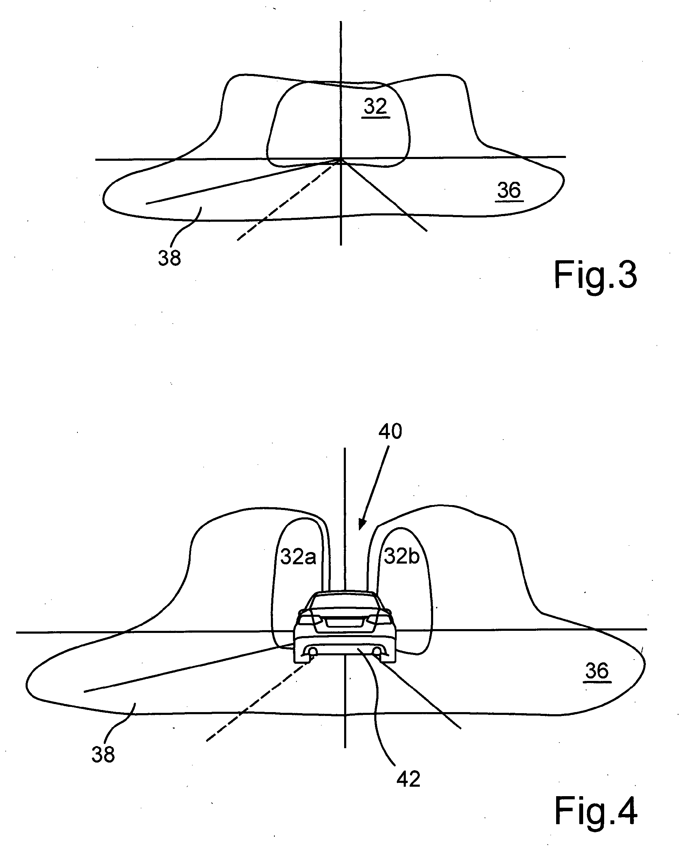

In Fig. 3 ist eine erste mögliche Ausführungsform einer von dem Lichtkegel 32 überlagerten Grundlichtverteilung 36 schematisch dargestellt. Wie bereits erläutert, wird mittels der Beleuchtungseinheiten 22 die Grundlichtverteilung 36, welche ein Abblendlicht und/oder ein Fernlicht aufweist, erzeugt bzw. bereitgestellt. Der mittels der beiden adaptiven Beleuchtungseinheiten 18, 20 erzeugte Lichtkegel 32 wird dabei der Grundlichtverteilung 36 überlagert, was zur Erhöhung der Beleuchtungsstärke in einem Zentralbereich der Grundlichtverteilung 36 beiträgt. Dadurch kann beispielsweise eine Fahrbahn 38 in einem Fernbereich verstärkt ausgeleuchtet werden.

In Fig. 4 ist eine weitere Einsatzmöglichkeit der adaptiven Beleuchtungseinheiten 18, 20 schematisch dargestellt. Wiederum wird mittels der Beleuchtungseinheiten 22 die Grundlichtverteilung 36 bereitgestellt bzw. erzeugt. Im vorliegenden Fall weist die Grundlichtverteilung 36 eine Aussparung 40 genau dort auf, wo sich ein vorausfahrendes Fahrzeug 42 befindet. Die beiden adaptiven Beleuchtungseinheiten 18, 20 werden dabei derart angesteuert, dass sich die beiden Lichtkegel 32a und 32b ergeben. Die Lichtkegel 32a, 32b werden somit als eine Art Teilfernlicht mit einer vertikalen Hell-Dunkel-Grenze eingesetzt. Dies dient insbesondere zur Erhöhung der Beleuchtungsstärke angrenzend an das durch die Grundlichtverteilung 36 ausgesparten vorausfahrenden Fahrzeugs 42.

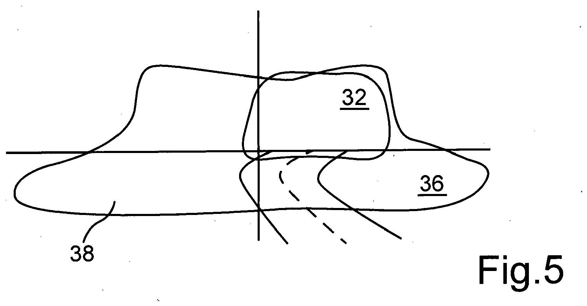

In Fig. 5 ist ein weiterer Anwendungsfall für die adaptiven Beleuchtungseinheiten 18, 20 schematisch dargestellt. Wiederum wird mittels der Beleuchtungseinheiten 22 die Grundlichtverteilung 36 bereitgestellt. Die beweglichen Lichtkegel 32 der Beleuchtungseinheiten 18, 20 dienen hierbei zur adaptiven Ausleuchtung der Fahrbahn 38 in Kurven als Topologieausgleich. Die beiden adaptiven Beleuchtungseinheiten 18, 20 werden im vorliegenden Fall als eine Art Teilfernlicht eingesetzt, mittels welchen insbesondere Kurvenverläufe besonders gut ausgeleuchtet werden können.

## Patentansprüche

1. Beleuchtungsvorrichtung (12) für ein Kraftfahrzeug (10), mit zumindest einer adaptiven Beleuchtungseinheit (18, 20), welche eine unbeweglich angeordnete Beleuchtungsquelle (24) und wenigstens ein zumindest teilweise in einem Strahlengang (26) der Beleuchtungsquelle (24) angeordnetes, als Linse ausgebildetes optisches Bauelement (28) sowie eine Verstelleinrichtung (30) umfasst, welche dazu ausgebildet ist, das optische Bauelement (28) zu bewegen, wobei
die Verstelleinrichtung (30) einen mikromechanischen Aktor umfasst, wobei das optische Bauelement (28) derart angeordnet und ausgebildet ist, dass aus einer Bewegung des optischen Bauelements (28) mittels des mikromechanischen Aktors eine Verschwenkung eines mittels der Beleuchtungsquelle (24) im Zusammenwirken mit dem optischen Bauelement (28) erzeugbaren Lichtkegels (32, 32a, 32b) resultiert, wobei das optische Bauelement (28) um eine Achse (34) verschwenkbar gelagert und der mikromechanische Aktor dazu ausgebildet ist, das optische Bauelement (28) um die Achse (34) zu verschwenken, wobei
die Beleuchtungsvorrichtung (12) dazu ausgebildet ist, eine Grundlichtverteilung (36) mit einer Abblendlichtfunktion und/oder einer Fernlichtfunktion, einer Teilfernlichtfunktion oder Markierungslichtfunktion bereitzustellen, wobei der mittels der Beleuchtungsquelle (24) im Zusammenwirken mit dem optischen Bauelement (28) erzeugbare bewegliche Lichtkegel (32, 32a, 32b) der Grundlichtverteilung (36) zumindest teilweise überlagerbar ist, indem die Beleuchtungsvorrichtung (12) dazu ausgebildet ist, jeweils mit dem beweglichen Lichtkegel (32, 32a, 32b) eine Beleuchtungsstärke in einem Zentralbereich der Grundlichtverteilung zu erhöhen, und/oder die Beleuchtungsstärke angrenzend an durch die Grundlichtverteilung ausgesparte Objekte als Teilfernlicht mit einer vertikalen Hell-Dunkel-Grenze zu erhöhen, und/oder in Kurven oder als sonstiger Topologieausgleich einen Fahrbahnverlauf adaptiv auszuleuchten, **dadurch gekennzeichnet, dass**
der mikromechanische Aktor ein elektrostatischer Aktor mit einer Form einer elektrostatischen Torsionsstruktur ist, mit der das optische Bauelement (28) bewegt wird.

2. Beleuchtungsvorrichtung (12) nach Anspruch 1,
**dadurch gekennzeichnet, dass**
die Beleuchtungsquelle (24) ein Laser, eine LED oder eine Hochleistungs-LED ist.

3. Kraftfahrzeug (10) mit einer Beleuchtungsvorrichtung (12) nach einem der vorhergehenden Ansprüche.

4. Kraftfahrzeug (10) nach Anspruch 3,
**dadurch gekennzeichnet, dass**
die Beleuchtungsvorrichtung (12) zwei der adaptiven Beleuchtungseinheiten (18, 20) aufweist, wobei eine der adaptiven Beleuchtungseinheiten (18) in einem linken Scheinwerfermodul (14) des Kraftfahrzeugs (10) und eine der adaptiven Beleuchtungseinheiten (20) in einem rechten Scheinwerfermodul (16) des Kraftfahrzeugs (10) angeordnet ist.

5. Verfahren zum Betreiben einer Beleuchtungsvorrichtung (12) eines Kraftfahrzeugs (10), bei welchem ein zumindest teilweise in einem Strahlengang (26) einer Beleuchtungsquelle (24) von zumindest einer adaptiven Beleuchtungseinheit (18, 20) angeordnetes, als Linse ausgebildetes optisches Bauelement (28) mittels einer Verstelleinrichtung (30) bewegt wird, wobei
die Verstelleinrichtung (30) einen mikromechanischen Aktor umfasst, mittels welchem das optische Bauelement (28) derart bewegt wird, dass ein mittels der Beleuchtungsquelle (24) im Zusammenwirken mit dem optischen Bauelement (28) erzeugter Lichtkegel (32, 32a, 32b) verschwenkt wird, wobei das optische Bauelement (28) um eine Achse (34) verschwenkbar gelagert ist und das optische Bauelement (28) mittels des mikromechanischen Aktors um die Achse (34) verschwenkt wird, wobei mittels der Beleuchtungsvorrichtung (12) eine Grundlichtverteilung (36) mit einer Abblendlichtfunktion und/oder einer Fernlichtfunktion, einer Teilfernlichtfunktion oder Markierungslichtfunktion bereitgestellt wird, wobei der mittels der Beleuchtungsquelle (24) im Zusammenwirken mit dem optischen Bauelement (28) erzeugte bewegliche Lichtkegel (32, 32a, 32b) der Grundlichtverteilung (36) zumindest teilweise überlagert wird, indem jeweils mit dem beweglichen Lichtkegel (32, 32a, 32b) eine Beleuchtungsstärke in einem Zentralbereich der Grundlichtverteilung erhöht wird, und/oder die Beleuchtungsstärke angrenzend an durch die Grundlichtverteilung ausgesparte Objekte als Teilfernlicht mit einer vertikalen Hell-Dunkel-Grenze erhöht wird, und/oder in Kurven oder als sonstiger Topologieausgleich ein Fahrbahnverlauf adaptiv ausgeleuchtet wird, **dadurch gekennzeichnet, dass** der mikromechanische Aktor ein elektrostatischer Aktor mit einer Form einer elektrostatischen Torsionsstruktur ist, mit der das optische Bauelement (28) bewegt wird.

6. Verfahren nach Anspruch 5,
**dadurch gekennzeichnet, dass**
der mikromechanische Aktor zum Bewegen des optischen Bauelements (28) in Abhängigkeit von einer erfassten Verkehrssituation des Kraftfahrzeugs (10) angesteuert wird.

7. Verfahren nach Anspruch 5 oder 6,
**dadurch gekennzeichnet, dass**
der Lichtkegel (32) derart verschwenkt wird, dass eine von der Beleuchtungsvorrichtung (12) bereitgestellte Grundlichtverteilung (36) zur Erhöhung der Lichtstärke von dem Lichtkegel (32) überlagert wird.

8. Verfahren nach einem der Ansprüche 5 bis 7,
**dadurch gekennzeichnet, dass**
der Lichtkegel (32a, 32b) derart verschwenkt wird, dass ein Objekt, insbesondere ein anderer Verkehrsteilnehmer (42), ausgeblendet wird.

9. Verfahren nach einem der Ansprüche 5 bis 8,
**dadurch gekennzeichnet, dass**
der Lichtkegel (32) derart verschwenkt wird, dass eine Fahrbahn (38) adaptiv ausgeleuchtet wird.

## Claims

1. Lighting device (12) for a motor vehicle (10) having at least one adaptive lighting unit (18, 20), which includes an immovably arranged lighting source (24) and at least one optical component (28) in the form of a lens arranged at least partially in a ray path (26) of the lighting source (24), as well as an adjusting device (30) which is configured to move the optical component (28), wherein
the adjusting device (30) includes a micromechanical actuator, wherein the optical component (28) is arranged and designed such that from a movement of the optical component (28) by means of the micromechanical actuator results a pivoting of a light cone (32, 32a, 32b) which can be generated by means of the lighting source (24) in cooperation with the optical component (28), wherein the optical component (28) is mounted able to pivot about an axis (34) and the micromechanical actuator is configured to pivot the optical component (28) about the axis (34), wherein the lighting device (12) is configured to provide a basic lighting distribution (36) having a dipped beam function and/or a main beam function, a partial main beam function or marker light function, wherein the movable light cone (32, 32a, 32b) which can be generated by means of the lighting source (24) in cooperation with the optical component (28) can be superimposed at least partially on the basic light distribution (36), in that the lighting device (12) is configured to increase in each case with the movable light cone (32, 32a, 32b) an illumination strength in a central region of the basic light distribution, and/or to increase the illumination strength adjacent to objects excluded by the basic light distribution as a partial main beam with a vertical light-dark-boundary, and/or in curves or as another type of topology compensation to illuminate a roadway course in an adaptive manner, **characterised in that**
the micromechanical actuator is an electrostatic actuator with a shape of an electrostatic torsional structure with which the optical component (28) is moved.

2. Lighting device (12) according to claim 1,
**characterised in that**
the lighting source (24) has a laser, an LED or a high-performance LED.

3. Motor vehicle (10) having a lighting device (12) according to any of the preceding claims.

4. Motor vehicle (10) according to claim 3,
**characterised in that**
the lighting device (12) has two of the adaptive lighting units (18, 20), wherein one of the adaptive lighting units (18) is arranged in a left headlamp module (14) of the motor vehicle (10) and one of the adaptive lighting units (20) is arranged in a right headlamp module (16) of the motor vehicle (10).

5. Method for operating a lighting device (12) of a motor vehicle (10) in which an optical component (28) in the form of a lens, arranged at least partially in a row path (26) of a lighting source (24) of at least one adaptive lighting unit (18, 20), is moved by means of an adjusting device (30), wherein
the adjusting device (30) includes a micromechanical actuator, by means of which the optical component (28) is moved such that a light cone (32, 32a, 32b), generated by means of the lighting source (24) in cooperation with the optical component (28), is pivoted, wherein the optical component (28) is mounted able to pivot about an axis (34) and the optical component (28) is pivoted about the axis (34) by means of the micromechanical actuator, wherein by means of the lighting device (12) a basic lighting distribution (36) is provided having a dipped beam function and/or a main beam function, a partial main beam function or marker light function, wherein the movable light cone (32, 32a, 32b) generated by means of the lighting source (24) in cooperation with the optical component (28) is superimposed at least partially on the basic light distribution (36), in that an illumination strength in a central region of the basic light distribution is increased in each case with the movable light cone (32, 32a, 32b), and/or the illumination strength adjacent objects excluded by the basic light distribution is increased as a partial main beam with a vertical light-dark-boundary, and/or in curves or as another type of topology compensation a roadway course is illuminated in an adaptive manner, **characterised in that** the micromechanical actuator is an electrostatic actuator with a form of an electrostatic torsional structure with which the optical component (28) is moved.

6. Method according to claim 5,
**characterised in that**
the micromechanical actuator is controlled to move the optical component (28) depending on a detected traffic situation of the motor vehicle (10).

7. Method according to claim 5 or 6,
**characterised in that**
the light cone (32) is pivoted such that a basic light distribution (36) provided by the lighting device (12) is superimposed by the light cone (32) for increasing the light strength.

8. Method according to any of claims 5 to 7,
**characterised in that**
the light cone (32a, 32b) is pivoted such that an object, in particular another traffic participant (42), is hidden.

9. Method according to any of claims 5 to 8,
**characterised in that**
the light cone (32) is pivoted such that a roadway (38) is adaptively illuminated.

## Revendications

1. Dispositif d'éclairage (12) pour un véhicule automobile (10) avec au moins une unité d'éclairage adaptative (18, 20), qui comprend une source d'éclairage (24) disposée de manière non mobile et au moins un composant optique (28) qui est disposé au moins partiellement dans un trajet de faisceau (26) de la source d'éclairage (24) et qui est conçu comme une lentille, et un dispositif de réglage (30) qui est conçu pour déplacer le composant optique (28), dans lequel
le dispositif de réglage (30) comprend un actionneur micromécanique, le composant optique (28) étant disposé et conçu de sorte qu'un mouvement du composant optique (28) au moyen de l'actionneur micromécanique entraîne un pivotement d'un faisceau lumineux (32, 32a, 32b) qui peut être généré au moyen de la source d'éclairage (24) en interaction avec le composant optique (28), dans lequel le composant optique (28) est monté de manière à pouvoir pivoter autour d'un axe (34) et l'actionneur micromécanique est conçu pour faire pivoter le composant optique (28) autour de l'axe (34), dans lequel le dispositif d'éclairage (12) est conçu pour fournir une distribution lumineuse de base (36) avec une fonction de feux de croisement et/ou une fonction de feux de route, une fonction partielle de feux de route ou une fonction de lumière de marquage, dans lequel le faisceau lumineux mobile (32, 32a, 32b), qui peut être généré au moyen de la source d'éclairage (24) en coopération avec le composant optique (28), peut être superposé au moins partiellement à la distribution lumineuse de base (36) en ce que le dispositif d'éclairage (12) est conçu pour être relié à chaque fois au faisceau lumineux mobile (32, 32a, 32b) pour augmenter une intensité lumineuse dans une zone centrale de la distribution lumineuse de base, et/ou pour augmenter l'intensité lumineuse à proximité d'objets en retrait de la distribution lumineuse de base en tant que faisceau principal partiel avec une coupure verticale, et/ou pour éclairer de manière adaptative un tracé de la chaussée dans les virages ou en tant qu'autre compensation de topologie, **caractérisé en ce que**
l'actionneur micromécanique est un actionneur électrostatique ayant la forme d'une structure de torsion électrostatique avec laquelle le composant optique (28) est déplacé.

2. Dispositif d'éclairage (12) selon la revendication 1,
**caractérisé en ce que**
la source d'éclairage (24) est un laser, une LED ou une LED haute puissance.

3. Véhicule automobile (10) avec un dispositif d'éclairage (12) selon l'une quelconque des revendications précédentes.

4. Véhicule automobile (10) selon la revendication 3,
**caractérisé en ce que**
le dispositif d'éclairage (12) présente deux des unités d'éclairage adaptatives (18, 20), dans lequel une des unités d'éclairage adaptatives (18) est disposée dans un module de phare gauche (14) du véhicule automobile (10) et une des unités d'éclairage adaptatives (20) est disposée dans un module de phare droit (16) du véhicule automobile (10).

5. Procédé de fonctionnement d'un dispositif d'éclairage (12) d'un véhicule automobile (10), dans lequel un composant optique (28), qui est disposé au moins partiellement dans un trajet de faisceau (26) d'une source d'éclairage (24) d'au moins une unité d'éclairage adaptative (18, 20) et qui est conçu comme une lentille, est déplacé au moyen d'un dispositif de réglage (30), dans lequel
le dispositif de réglage (30) comprend un actionneur micromécanique au moyen duquel le composant optique (28) est déplacé de sorte qu'un faisceau lumineux (32, 32a, 32b) généré au moyen de la source d'éclairage (24) en coopération avec le composant optique (28) est usé, dans lequel le composant optique (28) est monté de sorte à pouvoir pivoter autour d'un axe (34) et le composant optique (28) est usé autour de l'axe (34) au moyen de l'actionneur micromécanique, dans lequel une distribution lumineuse de base (36) avec une fonction de feux de croisement et/ou une fonction de feux de route, une fonction partielle de feux de route ou une fonction de lumière de marquage est prévue au moyen du dispositif d'éclairage (12), dans lequel le faisceau lumineux mobile (32, 32a, 32b) produit au moyen de la source d'éclairage (24) en coopération avec le composant optique (28) est superposé au moins partiellement à la distribution lumineuse de base (36) en augmentant respectivement une intensité lumineuse dans une zone centrale de la distribution lumineuse de base avec le faisceau lumineux mobile (32, 32a, 32b), et/ou l'intensité lumineuse à proximité d'objets en retrait de la distribution lumineuse de base est augmentée en tant que faisceau principal partiel avec une coupure verticale, et/ou un tracé de la chaussée est éclairé de manière adaptative dans les virages ou en tant qu'autre compensation de topologie, **caractérisé en ce que**
l'actionneur micromécanique est un actionneur électrostatique ayant la forme d'une structure de torsion électrostatique avec laquelle le composant optique (28) est déplacé.

6. Procédé selon la revendication 5,
**caractérisé en ce que**
l'actionneur micromécanique pour déplacer le composant optique (28) est actionné en fonction d'une situation de circulation détectée du véhicule automobile (10).

7. Procédé selon la revendication 5 ou 6,
**caractérisé en ce que**
le faisceau lumineux (32) est pivoté de sorte qu'une distribution lumineuse de base (36) fournie par le dispositif d'éclairage (12) est superposée par le faisceau lumineux (32) pour augmenter l'intensité lumineuse.

8. Procédé selon l'une quelconque des revendications 5 à 7,
**caractérisé en ce que**
le faisceau lumineux (32a, 32b) est pivoté de sorte qu'un objet, en particulier un autre usager de la route (42), est masqué.

9. Procédé selon l'une quelconque des revendications 5 à 8,
**caractérisé en ce que**
le faisceau lumineux (32) est pivoté de sorte qu'une voie (38) est éclairée de manière adaptative.
